# EUROPEAN PATENT APPLICATION

(11) **EP 4 729 264 A1**
(43) Date of publication of application: **22.04.2026**
(21) Application number: 23941565.6
(22) Date of filing: 14.06.2023
(51) Int. Cl.: B29B 17/00, G02B 6/44

(54) **OPTICAL CABLE REUSE SYSTEM**

(71) Applicant: Sumitomo Electric Industries, Ltd., Osaka-shi, Osaka 541-0041 (JP)
(72) Inventor: SATO, Fumiaki, Osaka-shi, Osaka 541-0041 (JP); SHIMODA, Yuuki, Osaka-shi, Osaka 541-0041 (JP); HASHIMOTO, Yutaka, Osaka-shi, Osaka 541-0041 (JP)
(74) Representative: Müller-Boré & Partner Patentanwälte PartG mbB
(86) International application number: PCT/JP2023/022067
(87) International publication number: WO 2024/257260

(57) **Abstract**

Provided is an optical cable reuse system comprising: a code which is attached to an optical cable and in which is stored component information about the outer jacket of the optical cable; an acquisition unit that acquires the component information; and a communication unit that transmits the component information to another device, after the optical cable is laid.

## Description

### TECHNICAL FIELD

The present disclosure relates to an optical cable reuse system.

### BACKGROUND ART

A technique for reusing a sheath of an optical cable has been developed. For example, Patent Literature 1 discloses a method for disassembling an optical cable in which a cable sheath is peeled off from an optical cable in which a tape material is interposed between a cable body and the cable sheath.

### CITATION LIST

### PATENT LITERATURE

Patent Document 1: JP2005-326656A

### SUMMARY OF INVENTION

An optical cable reuse system including:
a code attached to an optical cable and storing element information of a sheath of the optical cable;
an acquisition unit configured to acquire the element information; and
a communication unit configured to transmit the element information to another device, after laying the optical cable.

### BRIEF DESCRIPTION OF DRAWINGS

FIG. 1 is a perspective view illustrating an example of an optical cable, a sub duct, and a main duct that employ an optical cable reuse system according to an embodiment of the present disclosure.
FIG. 2 is a diagram illustrating a configuration of the optical cable reuse system according to the embodiment of the present disclosure.
FIG. 3 is a diagram illustrating an example of a method of element information stored in the code illustrated in FIG. 1.

### DESCRIPTION OF EMBODIMENTS

### [Problems to be Solved by the Present Disclosure]

Incidentally, the material name of the resin material included in the sheath may be printed on the sheath of the optical cable. However, there is a possibility that the type, additives, and the like of the resin material contained in the sheath cannot be sufficiently grasped only by checking the name of the material printed on the sheath, and a technique capable of more accurately grasping the elements of the sheath is desired.

An object of the present disclosure is to provide an optical cable reuse system capable of more accurately grasping elements of a sheath of an optical cable and appropriately reusing the sheath.

### [Effects of the Present Disclosure]

According to the present disclosure, elements of a sheath of an optical cable can be grasped more accurately, and reuse of the sheath can be appropriately performed.

### (Description of Embodiments of Present Disclosure)

First, embodiments of the present disclosure will be listed and described.

An optical cable reuse system according to an embodiment of the present disclosure includes (1) a code attached to an optical cable and storing element information of a sheath of the optical cable, an acquisition unit configured to acquire the element information, and a communication unit configured to transmit the element information to another device, after laying the optical cable.

With such a configuration, for example, since the element information of the optical cable can be transmitted to the device owned by the recycling company, the recycling company can accurately grasp the element of the sheath of the optical cable remaining after laying, and can appropriately reuse the sheath. In addition, since the code in which the element information is stored is attached to the optical cable, the operator can easily acquire the element information of the sheath of the optical cable at the site of the laying work.

(2) In the optical cable reuse system according to (1), the communication unit is configured to transmit the element information to an external server.

With such a configuration, for example, the recycling company can acquire the element information by accessing the external server using the device owned by the recycling company.

(3) In the optical cable reuse system according to (1) or (2), the element information includes a type of a resin material included in the sheath of the optical cable.

With such a configuration, it is possible to more appropriately determine the blending ratio of the sheath of the optical cable at the time of reuse, the reuse destination, and the like.

(4) In the optical cable reuse system according to any one of (1) to (3) described above, the element information includes a type of an additive included in the sheath of the optical cable.

With such a configuration, it is possible to more appropriately determine the blending ratio of the sheath of the optical cable at the time of reuse, the reuse destination, and the like.

(5) In the optical cable reuse system according to any one of (1) to (4), the sheath of the optical cable is configured to be reused as a laying member for another optical cable.

Here, when the sheath of the optical cable is reused as the sheath of another optical cable, the reused sheath may affect the characteristics of the other optical cable. On the other hand, as described above, when the sheath of the optical cable is reused as a laying member for another optical cable, it is possible to prevent the characteristics of the other optical cable from being affected.

(6) In the above optical cable reuse system (5), the laying member is a duct in which the other optical cable is laid.

This makes it possible to effectively use the resin material contained in the sheath of the optical cable.

(7) In the optical cable reuse system according to (5), a ratio of the sheath of the optical cable reused in the laying member is 25% or less.

Here, when the blending ratio of the reused material in the laying member increases, the tensile elongation at break of the laying member tends to decrease. On the other hand, as described above, when the ratio of the sheath of the optical cable reused in the laying member is 25% or less, it is possible to prevent the tensile elongation at break of the laying member from decreasing.

### (Details of Embodiment of Present Disclosure)

A specific example of an optical cable reuse system of the present disclosure will be described below with reference to the drawings. Note that the present disclosure is not limited to these examples, but is indicated by the claims, and is intended to include all modifications within the meaning and scope equivalent to the claims.

### [Configuration of Cable, Sub Duct, and Main Duct]

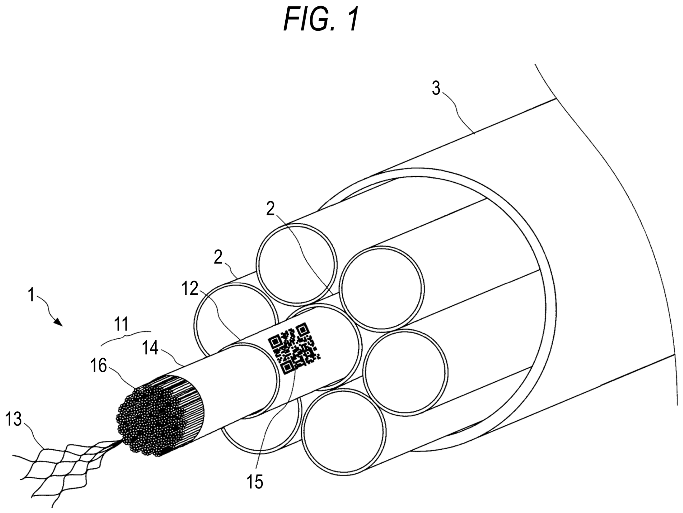

FIG. 1 is a perspective view illustrating an example of an optical cable 1, a sub duct 2, and a main duct 3 in which a reuse system 100 of the optical cable 1 according to an embodiment of the present disclosure is used. As shown in FIG. 1, the sub duct 2 is laid inside the main duct 3, and the optical cable 1 is laid inside the sub duct 2. Although one optical cable 1 is laid inside one sub duct 2 in FIG. 1, a plurality of optical cables 1 may be laid inside one sub duct 2.

The optical cable 1 is, for example, a micro duct cable laid inside the sub duct 2 by air pumping or pulling, and has an outer diameter of about 20 mm. The optical cable 1 includes a cable core 11 and a sheath 12 formed around the cable core 11.

The cable core 11 includes an optical fiber ribbon 16 including a plurality of optical fiber cores 13 and an upper wound tape 14 covering the periphery of the plurality of optical fiber ribbons 16. In the optical fiber core wires 13 configuring the optical fiber ribbon 16, the optical fiber core wires 13 adjacent to each other are intermittently connected along the longitudinal direction of the optical cable 1, for example. The optical cable 1 illustrated in FIG. 1 is a slot-less type, but may be a slot-type.

The upper wound tape 14 is longitudinally wrapped or spirally wound around the plurality of optical fiber ribbons 16. The sheath 12 is formed by extrusion molding around the upper wound tape 14. The sheath 12 is preferably formed of a material in which additive amount of silicone is in the range of 0.1 mass% to 0.5 mass%. In this case, when the optical cable 1 is laid inside the sub duct 2, in a state where the sheaths 12 are in contact with each other or in a state where the sheath 12 and the sub duct 2 are in contact with each other, the sheath 12 can be made slippery, and thus the laying work of the optical cable 1 can be easily performed.

A code 15 is attached to the sheath 12. In the example illustrated in FIG. 1, a QR code (registered trademark) that can record a lot of information such as characters and numbers by combining white cells and black cells and that enables high-speed reading is attached as the code 15.

Element information of the sheath 12 of the optical cable 1 is stored in the code 15. The element information includes, for example, the type of resin material included in the sheath 12, such as high-density polyethylene (HDPE) or low-density polyethylene (LDPE), and the content of each type of resin material. Furthermore, the element information includes, for example, the type of additive contained in the sheath 12, such as carbon or silicone.

### [Configuration of Information Management System]

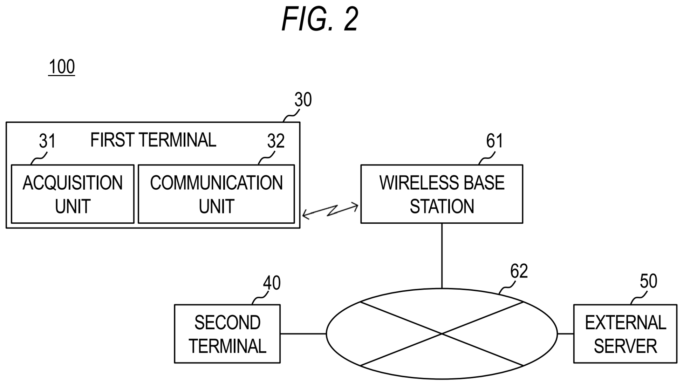

FIG. 2 is a diagram illustrating a configuration of the reuse system 100 according to the embodiment of the present disclosure. Referring to FIG. 2, a reuse system 100 includes a first terminal 30, a second terminal 40, and an external server 50. The first terminal 30 is communicably connected to the second terminal 40 and the external server 50 via a wireless base station 61 and an external network 62 such as the Internet. The second terminal 40 is communicably connected to the external server 50 via the external network 62.

The first terminal 30 is, for example, a smartphone used by an operator who installs the optical cable 1, and includes an acquisition unit 31 corresponding to a camera of the smartphone and a communication unit 32. The second terminal 40 is, for example, a personal computer (PC) used by a recycling company.

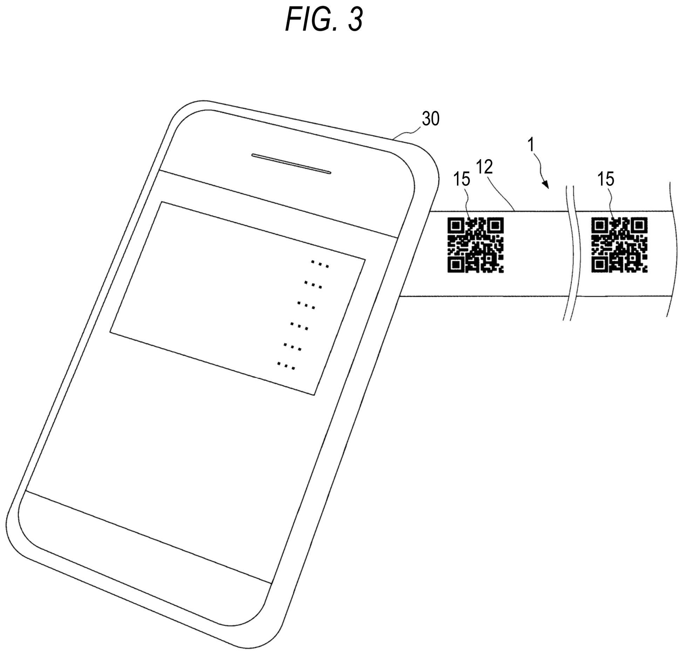

FIG. 3 is a diagram illustrating an example of a method of reading element information stored in the code 15 illustrated in FIG. 1. Referring to FIG. 3, code 15 are attached to the sheath 12 of the optical cable 1 at a plurality of positions at predetermined intervals along the longitudinal direction of the optical cable 1. The predetermined interval is included in a range of 30 cm to 1 m, for example.

Referring to FIGS. 2 and 3, the operator captures any one of the plurality of code 15 using the first terminal 30. Accordingly, the acquisition unit 31 in the first terminal 30 acquires the element information stored in the code 15. In addition, for example, when a remainder of the optical cable 1 occurs after laying the optical cable 1, the operator acquires the element information stored in the code 15 from the sheath 12 of the remaining optical cable 1 and performs an operation, on the first terminal 30, for transmitting the element information to the second terminal 40. Accordingly, the communication unit 32 in the first terminal 30 transmits the element information acquired by the acquisition unit 31 to the second terminal 40 via the wireless base station 61 and the external network 62.

When receiving the element information transmitted from the first terminal 30, the second terminal 40 displays the content of the element information on the monitor of the second terminal 40, for example. As a result, the recycling company can accurately grasp the elements of the sheath 12 of the optical cable 1 remaining after laying.

The first terminal 30 may be configured to transmit the element information not only to the second terminal 40 but also to the external server 50. For example, in addition to the element information of the sheath 12 of the optical cable 1, an identification (ID) of the optical cable 1 is stored in the code 15. In this case, the first terminal 30 can acquire the element information and the ID stored in the code 15 and store the acquired element information and the ID in the external server 50 in association with each other.

The second terminal 40 can acquire the element information stored in the external server 50. For example, it is assumed that the recycling company performs, on the second terminal 40, an operation of requesting input of the ID of the optical cable 1 and acquisition of the element information of the sheath 12 of the optical cable 1. In this case, the second terminal 40 can acquire element information corresponding to the input ID among the element information stored in the external server 50 and display the element information on a monitor or the like. That is, in the recycling company, it is possible to acquire the element information of the sheath 12 stored in the external server 50 by not only directly acquiring the element information of the sheath 12 from the worker side who performs laying of the optical cable 1 but also accessing the external server 50 using the second terminal 40.

The first terminal 30 is not limited to a smartphone, and may be an AR (Argumented Reality) glass or the like. A two-dimensional code or a one-dimensional code other than the QR code may be attached to the sheath 12 of the optical cable 1 as the code 15.

The element information stored in the code 15 is not limited to the information indicating the element of the sheath 12 itself, and may be identification information corresponding to the element of the sheath 12. For example, it is assumed that the external server 50 stores a correspondence table indicating a correspondence relationship between the element of the sheath 12 and the identification information. When the identification information is received from the first terminal 30 as the element information stored in the code 15, the second terminal 40 can acquire the element corresponding to the identification information from the correspondence table stored in the external server 50.

### [Reuse of Sheath]

Since the element of the sheath 12 of the optical cable 1 can be accurately grasped by the recycler as described above, the reuse of the sheath 12 can be more appropriately performed. For example, the recycler can more appropriately determine the blending ratio, the reuse destination, and the like at the time of reuse of the sheath 12 in consideration of the type of the resin material of the sheath 12 and the type of the additive.

The sheath 12 of the optical cable 1 is reused as a part of a laying member such as a duct for laying another optical cable inside, for example. When the sheath 12 is reused as a sheath of another optical cable, the reused sheath 12 may affect the characteristics of the other optical cable. On the other hand, as described above, when the sheath 12 is reused as a laying member for another optical cable, it is possible to prevent the characteristics of the other optical cable from being affected, and it is possible to effectively use the resin material included in the sheath 12.

When the sheath 12 of the optical cable 1 is reused as a part of the laying member, the ratio of the sheath 12 of the optical cable 1 in the laying member is preferably 25% or less. Here, when the blending ratio of the reused material in the laying member increases, the tensile elongation at break of the laying member tends to decrease. On the other hand, as described above, when the ratio of the sheath 12 of the optical cable 1 reused in the laying member is 25% or less, it is possible to prevent the tensile elongation at break of the laying member from decreasing.

Although the present disclosure has been described above based on specific embodiments, the present disclosure is not limited to these examples, and is intended to be represented by the claims and include all modifications within the meaning and scope equivalent to the claims.

### REFERENCE SIGNS LIST

1 optical cable
2 sub duct
3 main duct
11 cable core
12 sheath
13 optical fiber core
14 upper wound tape
15 codes
16 optical fiber ribbon
30 first terminal
31 acquisition unit
32 communication unit
40 second terminal
50 external server
61 wireless base station
62 external network
100 reuse system

## Claims

1. An optical cable reuse system comprising:
a code attached to an optical cable and storing element information of a sheath of the optical cable;
an acquisition unit configured to acquire the element information; and
a communication unit configured to transmit the element information to another device, after laying the optical cable.

2. The optical cable reuse system according to claim 1,
wherein the communication unit is configured to transmit the element information to an external server.

3. The optical cable reuse system according to claim 1 or 2,
wherein the element information includes a type of a resin material included in the sheath of the optical cable.

4. The optical cable reuse system according to claim 1 or 2,
wherein the element information includes a type of an additive included in the sheath of the optical cable.

5. The optical cable reuse system according to claim 1 or 2,
wherein the sheath of the optical cable is configured to be reused as a laying member for another optical cable.

6. The optical cable reuse system according to claim 5,
wherein the laying member is a duct in which the other optical cable is laid.

7. The optical cable reuse system according to claim 5,
wherein a ratio of the sheath of the optical cable reused in the laying member is 25% or less.
